(19) Europäisches Patentamt
European Patent Office
Office européen des brevets

(11) Veröffentlichungsnummer: **0 152 861**
**A2**

(12) # EUROPÄISCHE PATENTANMELDUNG

(21) Anmeldenummer: **85101226.0**

(22) Anmeldetag: **06.02.85**

(51) Int. Cl.[4]: **C 08 G 18/10**, C 08 G 18/32, C 08 G 18/78

(30) Priorität: **18.02.84 DE 3405939**

(43) Veröffentlichungstag der Anmeldung: **28.08.85 Patentblatt 85/35**

(84) Benannte Vertragsstaaten: **BE DE FR GB IT SE**

(71) Anmelder: **BAYER AG, Konzernverwaltung RP Patentabteilung, D-5090 Leverkusen 1 Bayerwerk (DE)**

(72) Erfinder: **Rasshofer, Werner, Dr., Wolfskaul 10, D-5000 Köln 80 (DE)**
Erfinder: **Paul, Reiner, Dr., Oberhausener Strasse 55, D-4330 Mühlheim-Ruhr (DE)**

(54) **Verfahren zur Herstellung von urethanmodifizierten Polyisocyanat-Zubereitungen und ihre Verwendung bei der Herstellung von Polyurethankunststoffen oder von Polyisocyanatkunststoffen.**

(57) Ein Verfahren zur Herstellung von neuen, urethanmodifizierten Polyisocyanat-Zubereitungen durch Umsetzung von überschüssigen Mengen an organischen Polyisocyanaten mit zwei alkoholische Hydroxylgruppen aufweisenden Hydroxyalkyl-substituierten Hydantoinen des OH-Zahlbereichs 56 bis 596, sowie die Verwendung der Polyisocyanat-Zubereitungen als Isocyanat-Komponente bei der Herstellung von Polyurethankunststoffen nach dem Isocyanat-Polyadditionsverfahren oder von Polyisocyanurat-Kunststoffen.

EP 0 152 861 A2

BAYER AKTIENGESELLSCHAFT 5090 Leverkusen, Bayerwerk

Konzernverwaltung RP Wr/by-c
Patentabteilung

# Verfahren zur Herstellung von urethanmodifizierten Polyisocyanat-Zubereitungen und ihre Verwendung bei der Herstellung von Polyurethankunststoffen oder von Polyisocyanuratkunststoffen

Die Erfindung betrifft ein neues Verfahren zur Herstellung von neuen, urethanmodifizierten Polyisocyanat-Zubereitungen, die besonders wertvolle Ausgangsmaterialien bei der Herstellung von Polyurethankunststoffen darstellen, und ihre Verwendung zur Herstellung von Polyurethankunststoffen.

Die Herstellung von urethanmodifizierten Polyisocyanat-Zubereitungen, d.h. von endständige Isocyanatgruppen aufweisenden Prepolymeren bzw. Semiprepolymeren, insbesondere auf Basis von Polyisocyanaten bzw. Polyisocyanatgemischen der Diphenylmethanreihe (4,4'-Diisocyanatodiphenylmethan, dessen Gemische mit 2,4'- und gegebenenfalls 2,2'-Diisocyanatodiphenylmethan oder Phosgenierungsprodukte von Anilin/Formaldehyd-Kondensaten, die neben diesen Diisocyanaten deren höhere Homologe enthalten) und den unterschiedlichsten Polyhydroxylverbindungen ist bereits bekannt (vgl. z.B. EP-A-10 850

oder 66 130; DE-OS 2 347 207, 2 404 166, 2 513 793, 2 513 796, 2 620 222, 2 622 104, 2 732 182, 2 737 338, 2 804 375, 2 810 596, 2 815 579 oder 2 913 126; US-PS 3 644 457, 4 055 548, 4 234 714 oder 4 321 333, sowie GB-PS 1 369 334).

Im allgemeinen geht es bei den Verfahren dieser Vorveröffentlichungen um die Verflüssigung von bei Raumtemperatur festem Diisocyanatodiphenylmethan, insbesondere 4,4'-Diisocyanatodiphenylmethan oder um die Verminderung der Kristallisationsneigung von bei Raumtemperatur flüssigen Polyisocyanatgemischen der Diphenylmethanreihe während der Lagerung bei tiefen Temperaturen.

Jetzt wurde überraschend gefunden, daß urethanmodifizierte Polyisocyanat-Zubereitungen auf Basis von beliebigen organischen Polyisocyanaten, insbesondere aromatischen Polyisocyanaten und besonders bevorzugt auf Basis von Polyisocyanaten bzw. Polyisocyanatgemischen der Diphenylmethanreihe und Alkoxylierungsprodukten von Bisphenolen der nachstehend genannten Art nicht nur Kompositionen mit einem erniedrigten Schmelzpunkt bzw. einer verminderten Kristallisationsneigung bei der Lagerung bei tiefen Temperaturen darstellen, sondern darüber hinaus die Herstellung von Polyurethankunststoffen, insbesondere von Polyurethan-Formkörpern mit einer homogenen Oberfläche gestatten, die sich durch wesentlich verbesserte mechanische Eigenschaften, insbesondere eine höhere Steifigkeit und bessere "green strength" bei gleichzeitig hoher Flexibilität und hoher Bruchdehnung und einem guten Wärmestand auszeichnen.

Die Verwendung von Hydantoin-Derivaten in der Polyisocyanatchemie ist an sich bekannt.

So beschreibt die US-PS 3 928 289 die Verwendung von Hydroxylalkylgruppen aufweisendem Hydantoin zusammen mit Polyester- und Polyetherpolyolen eines Molekulargewichts von $\geq$ 700 zur Herstellung von Polyurethanen. Aliphatische Isocyanate werden bevorzugt. Die DE-OS 2 150 152 beschreibt Polyisocyanate, die durch Umsetzung von Monohydroxylalkyl-hydantoinen und -uracilen mit Polyisocyanaten in vorzugsweise stöchiometrischem 1 : 2-Verhältnis erhalten werden. Die DE-OS 2 523 615 erwähnt die Mitverwendung von bishydroxyalkylierten Hydantoinen, zusammen mit anderen Vernetzern und Polyoxyalkylenpolyolen, kombiniert mit Polyisocyanaten, als Bindemittel für Formsand. Isocyanatfreie Zusammensetzungen werden nach US-PS 4 002 798 so erhalten, daß Bishydroxyethylhydantoin mit einem Allylalkohol und einem Diisocyanat und das resultierende Polyen mit einem Polythiol zur Umsetzung gebracht wird. Ähnliche Zusammensetzungen beschreibt die US-PS 4 017 650. Isocyanatgruppen aufweisende Hydantoine lassen sich auch nach DE-OS 2 750 722 erhalten, indem das Produkt der Umsetzung aus einem Aminoalkohol und einem ungesättigten Dicarbonsäureester mit einem Di- oder Polyisocyanat unter Cyclisierung umgesetzt wird. Die Produkte wurden für Draht- und Elektroisolierlacke eingesetzt.

Den genannten Vorveröffentlichungen ist indessen nicht zu entnehmen, daß Isocyanatgruppen aufweisende Prepolymere bzw. Semiprepolymere auf Basis von organischen Polyisocyanaten und alkoholische Hydroxylgruppen aufweisenden Hydantoin-Derivaten der beim erfindungsgemäßen Verfahren als Komponente b) einzusetzenden Art Kompositionen mit einem erniedrigten Schmelzpunkt bzw. einer verminderten Tendenz zur Kristallisationsneigung bei der Lagerung bei tiefen Temperaturen darstellen und besonders vorteilhaft bei der Herstellung von Polyurethankunststoffen, insbesondere von Polyurethan-Formkörpern mit einer homogenen Oberfläche, einsetzbar sind.

Gegenstand der Erfindung ist ein Verfahren zur Herstellung von urethanmodifizierten Polyisocyanat-Zubereitungen mit einem NCO-Gehalt von 5 bis 45 Gew.-% durch Umsetzung von a) organischen Polyisocyanaten mit einem NCO-Gehalt von 30 bis 50 Gew.-% oder Gemischen von organischen Polyisocyanaten mit einem NCO-Gehalt von 30 bis 50 Gew.-% mit b) organischen Polyhydroxylverbindungen unter Einhaltung eines NCO/-OH-Äquivalentverhältnisses von 2 : 1 bis 50 : 1, dadurch gekennzeichnet, daß man als organische Polyhydroxylverbindungen b) 2 alkoholische Hydroxylgruppen aufweisende, an Stickstoff Hydroxyalkylsubstituenten, die gegebenenfalls Etherbrücken aufweisen, tragende Hydantoine des OH-Zahl Bereichs 56 bis 596, gegebenenfalls in Abmischung mit bis zu 50 Hydroxyläquivalentprozent an anderen organischen Polyhydroxylverbindungen verwendet.

Gegenstand der Erfindung ist auch die Verwendung der nach diesem Verfahren erhaltenen, urethanmodifizierten Polyisocyanat-Zubereitungen als Ausgangsmaterial bei der Herstellung von Polyurethankunststoffen nach dem Isocyanat-Polyadditionsverfahren oder von Polyisocyanuratkunststoffen.

Als Ausgangsmaterialien können beim erfindungsgemäßen Verfahren beliebige organische Polyisocyanate mit einem NCO-Gehalt von 30 bis 50 Gew.-%, bzw. beliebige Gemische derartiger organischer Polyisocyanate mit einem NCO-Gehalt von 30 bis 50 Gew.-% eingesetzt werden.

Vorzugsweise werden beim erfindungsgemäßen Verfahren Polyisocyanate mit aromatisch gebundenen Isocyanatgruppen verwendet. Hierzu gehören beispielsweise 2,4-Diisocyanatotoluol, 2,6-Diisocyanatotoluol, 1,2-Bis-(4-isocyanatophenyl)-ethan, Alkyl-, insbesondere Methylsubstituierte Diisocyanatodiphenylmethane der beispielsweise in EP-A-24 665 oder 46 556 beschriebenen Art und insbesondere Polyisocyanate bzw. Polyisocyanatgemische der Diphenylmethanreihe. Beliebige Gemische derartiger Polyisocyanate können beim erfindungsgemäßen Verfahren ebenfalls verwendet werden. Bei den besonders bevorzugt einzusetzenden Polyisocyanat-Gemischen der Diphenylmethanreihe handelt es sich um 4,4'-Diisocyanatodiphenylmethan, dessen Gemische mit 2,4'- und gegebenenfalls 2,2'-Diisocyanatodiphenylmethan mit einem Gehalt, bezogen auf Gesamtgemisch, an 2,4'-Diisocyanatodiphenylmethan von bis zu 70 Gew.-%, vorzugsweise bis zu 20 Gew.-%, wobei der Gehalt an

2,2'-Diisocyanatodiphenylmethan im allgemeinen 5 Gew.-% nicht übersteigt, und um Polyisocyanate, wie sie durch Phosgenierung von Anilin/Formaldehyd-Kondensaten erhalten werden, und die neben Diisocyanatodiphenylmethan-Isomeren der genannten Art unterschiedliche Mengen an höheren homologen Polyisocyanaten (im allgemeinen 5 bis 60 Gew.-%, bezogen auf Gesamtgemisch) enthalten können. Vorzugsweise werden beim erfindungsgemäßen Verfahren als Polyisocyanate derartige Polyisocyanate bzw. Polyisocyanatgemische der Diphenylmethanreihe, gegebenenfalls in Abmischung mit bis zu 50 NCO-Äquivalentprozent, bezogen auf Gesamtgemisch, an anderen aromatischen Polyisocyanaten eingesetzt. Besonders bevorzugt werden jedoch beim erfindungsgemäßen Verfahren die genannten Polyisocyanate bzw. Polyisocyanatgemische der Diphenylmethanreihe als ausschließliche Polyisocyanat-Komponente beim erfindungsgemäßen Verfahren verwendet. Die bevorzugten Polyisocyanate bzw. Polyisocyanatgemische der Diphenylmethanreihe weisen im allgemeinen einen NCO-Gehalt von ca. 31 - 34 Gew.-% auf.

Reaktionspartner für die Polyisocyanate sind 2 alkoholische Hydroxylgruppen aufweisende, an Stickstoff Hydroxyalkyl-Substituenten, die gegebenenfalls Etherbrücken aufweisen, tragende Hydantoine des OH-Zahlbereichs 56 bis 596.

Typische derartige, bei erfindungsgemäßen Verfahren als Komponente b) einzusetzende Polyhydroxylverbindungen sind Verbindungen der Formel (I)

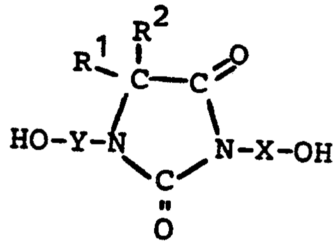

(I)

für welche

$R^1$ und $R^2$ für gleiche oder verschiedene Reste stehen und Alkylreste bedeuten oder zusammen mit dem Kohlenstoffatom des heterocyclischen Rings einen cycloaliphatischen Ring bilden,

X für einen geradkettigen oder verzweigten Alkylenrest mit 2 bis 6 Kohlenstoffatomen oder einen Rest steht, wie er durch Entfernung des endständigen Sauerstoffatoms aus einer Polyalkylenetherkette erhalten wird, und

Y für einen Rest der bei der Definition von X genannten Art oder einen Rest der Formel

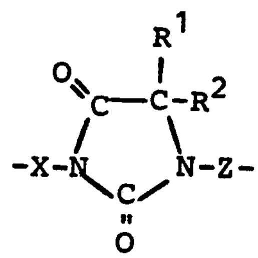

(II)

steht, wobei

X die bereits genannte Bedeutung hat, wobei die Hydroxylgruppe mit dem Rest X verknüpft ist, und

Z für einen zweiwertigen Kohlenwasserstoffrest steht.

Bevorzugte derartige Verbindungen sind insbesondere solche der genannten allgemeinen Formel, für welche

$R^1$ und $R^2$ für gleiche oder verschiedene Alkylreste mit 1 bis 4 Kohlenstoffatomen stehen oder zusammen mit dem Kohlenstoffatom des heterocyclischen Rings einen Cyclopentan- oder Cyclohexanring bilden, besonders bevorzugt jedoch jeweils für Methylgruppen stehen, und

X und Y für gleiche Reste stehen und jeweils Ethylen-Reste oder 2-Propylen-Reste bedeuten.

Die Hydantoin-Derivate der Formel (I) können in bekannter Weise z.B. gemäß DE-OS 1 812 003 durch Alkoxylierung der ihnen zugrunde liegenden Hydantoine der Formel

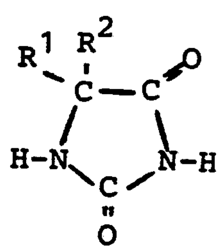

(III)

erhalten werden.

Vorzugsweise werden bei dieser Alkoxylierungsreaktion Ethylenoxid und/oder Propylenoxid als Alkoxylierungsmittel verwendet, wobei vorzugsweise in Gegenwart eines geeigneten Katalysators wie z.B. Tetraethylammoniumchlorid, tert. Aminen wie N,N-Dimethylbenzylamin oder wäßriger Natronlauge bei 20 bis 200°C, vorzugsweise 60 bis 150°C gearbeitet wird. Bei Verwendung der Alkylenoxide in einem Molverhältnis Hydantoin : Alkylenoxid von 1:2 oder einer höheren Menge an Alkylenoxid entstehen die besonders bevorzugt geeigneten Dihydroxyverbindungen, die an beiden Stickstoffatomen des Hydantoins einen Hydroxyalkyl-Substituenten aufweisen. Bei Verwendung eines höheren Alkylenoxid-Überschusses entstehen Alkoxylierungsprodukte, deren N-Substituenten Hydroxyalkylreste mit eingebauten Etherbrücken darstellen. Bei Verwendung der Alkylenoxide in unter dem genannten Molverhältnis von 1 : 2 liegenden Mengen entstehen, z.B. gemäß DE-AS 1 912 026 vorzugsweise Monoalkoxylierungsprodukte der Formel (IV)

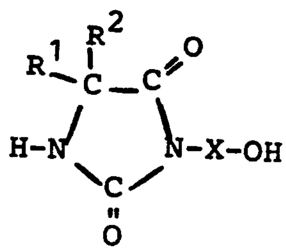

(IV)

(X = Alkylenrest), die mit beliebigen Dihalogenverbindungen der Formel (V)

$$\text{Hal} - \text{Z} - \text{Hal} \qquad \text{(V)}$$

für welche

Z die bereits obengenannte Bedeutung hat und vorzugsweise für einen Alkylenrest mit 1 bis 6 Kohlenstoffatomen, insbesondere einen Methylenrest steht, und

Hal für Chlor oder Brom, vorzugsweise Chlor steht,

zu erfindungsgemäßen Ausgangsverbindungen b) mit 2 Hydantoinringen der obengenannten Art umgesetzt werden können. Gemäß US-PS 3 542 803 und US-PS 3 296 208 können auch Hydantoin-Verbindungen der allgemeinen Formel (III) mit Dihalogenverbindungen der allgemeinen Formel (V) umgesetzt und anschließend mit Alkylenoxiden die entsprechenden Bishydantoindiole hergestellt werden. Gemäß US-PS 2 417 999 oder 2 418 000 können auch Methylenbrücken-aufweisende Bishydantoin-Verbindungen durch Umsetzung eines Hydantoins mit Formaldehyd hergestellt werden, die anschließend einer Alkoxylierung unterzogen werden. Es ist auch möglich, im Anschluß an die obengenannte Kondensationsreaktion der Verbindungen der allgemeinen Formel (IV) mit den Verbindungen der allgemeinen Formel (V), die vorzugsweise unter Verwendung eines Molverhältnisses der Reaktionspartner (IV) : (V) von 1 : 2 bei 20 bis 250, insbesondere 100 bis 200°C durchgeführt wird, gewünschtenfalls eine weitergehende Alkoxylierung der Hydroxyalkylsubstituenten HO-X- unter Aufbau von Polyetherglykolen durchzuführen. Auch derartige Polyetherdiole sind als erfindungsgemäße Aufbaukomponente b) geeignet.

Geeignete Hydantoin-Ausgangsverbindungen der Formel (III) sind beispielsweise Hydantoin, 5-Methylhydantoin, 5,5-Dimethylhydantoin, 5-Methyl-5-ethylhydantoin, 5-n-Propylhydantoin, 5-Isopropylhydantoin, 1,3-Diaza-spiro-(4,5)-decan-2,4-dion, 1,3-Diaza-spiro-(4,4)-nonan-2,4-dion, bevorzugt ist 5,5-Dimethylhydantoin.

Die Herstellung solcher Hydantoin-Verbindungen ist z.B. im Houben-Weyl-Müller, Methoden der Org. Chemie, Bd. XI/2, S. 368 - 372, Thieme-Verlag, Stuttgart, 1958; in den Artikeln von E.S. Schipper und A.R. Day in R.C. Elderfield, Heterocyclic Compounds, Vol. V, S. 254 - 262, John Wiley & Sons, New York und Chapman & Hall, London, 1957 oder von J. Habermeier, Angew. Makromol. Chem. 63, 63 (1977) beschrieben.

Bei der Durchführung des erfindungsgemäßen Verfahrens können neben den genannten Hydroxylgruppen-aufweisenden Hydantoinen, insbesondere denen der allgemeinen Formel (I) auch andere Polyhydroxylverbindungen in einer Menge von bis zu 50 Hydroxyläquivalentprozent, bezogen auf alle Polyhydroxylverbindungen mitverwendet werden. Dies bedeutet insbesondere, daß die genannten Ausgangspolyhydroxylverbindungen, insbesondere die Verbindungen der allgemeinen Formel (I) in Abmischung mit anderen Polyhydroxylverbindungen, beispielsweise solchen wie sie gemäß den obgenannten Vorveröffentlichungen zur Modifizierung von Polyisocyanaten der Diphenylmethanreihe bereits eingesetzt worden sind oder beliebigen anderen Polyhydroxylverbindungen der aus der Polyurethanchemie an sich bekannten Art (vgl. z. B. US-PS 4065 410),

verwendet werden. Es ist grundsätzlich auch möglich, die Ausgangspolyisocyanate nacheinander mit den erfindungswesentlichen Hydantoin-Verbindungen, insbesondere den Verbindungen der allgemeinen Formel (I) und anschließend mit den genannten anderen Polyhydroxylverbindungen oder auch in umgekehrter Reihenfolge mit diesen Polyhydroxylverbindungen zur Reaktion zu bringen. Vorzugsweise wird das erfindungsgemäße Verfahren jedoch unter ausschließlicher Verwendung von erfindungswesentlichen Hydantoin-Verbindungen, insbesondere den Verbindungen der allgemeinen Formel (I) durchgeführt.

Bei der Durchführung des erfindungsgemäßen Verfahrens kommen die Reaktionspartner im übrigen in solchen Mengen zum Einsatz, die einem Äquivalentverhältnis von Isocyanatgruppen zu Hydroxylgruppen der Hydantoin-Verbindungen, insbesondere den Verbindungen der Formel (I) und gegebenenfalls zusätzlich verwendeten Polyhydroxylverbindungen von 2:1 bis 50:1, vorzugsweise 4:1 bis 20:1 entsprechen.

Das erfindungsgemäße Verfahren wird im allgemeinen innerhalb des Temperaturbereichs von 20 - 140°C, vorzugsweise 40 - 120°C durchgeführt. Die Umsetzung erfolgt im allgemeinen durch Zusammengeben der Reaktionspartner bei Raumtemperatur und anschließendes Aufheizen auf maximal 140°C, vorzugsweise 40 - 100 °C, bis der berechnete NCO-Gehalt erreicht ist. Es ist auch möglich, in manchen

Fällen, insbesondere wenn die Hydroxylkomponente einen relativ hohen Schmelzpunkt und geringe Löslichkeit in dem Polyisocyanat aufweist, auch bevorzugt, das Ausgangspolyisocyanat bzw. Polyisocyatgemisch vorzulegen, es auf eine Temperatur von z.B. 40 - 140°C, vorzugsweise 80-120°C aufzuheizen und die Polyhydroxylkomponente auf einmal oder portionsweise, vorzugsweise portionsweise, zuzugeben. Dabei sollte darauf geachtet werden, daß die Innentemperatur des Reaktionsgefäßes die genannte Obergrenze von 140°C nicht übersteigt, damit Nebenreaktionen wie z.B. Trimerisierung der Isocyanatgruppen vermieden werden. Die resultierenden Urethangruppen aufweisenden Polyisocyanat-Zubereitungen stellen im allgemeinen sogenannte Semiprepolymere dar, d.h. Gemische von nicht umgesetztem Ausgangspolyisocyanat mit urethanmodifizierten NCO-Prepolymeren. Lediglich bei Verwendung von niedrigen NCO/OH-Äquivalentverhältnissen innerhalb der obengenannten Bereiche entstehen beim erfindungsgemäßen Verfahren praktisch ausschließlich echte NCO-Prepolymere, die nur noch sehr geringe Mengen an nicht umgesetztem Ausgangspolyisocyanat enthalten. Die erfindungsgemäßen Verfahrensprodukte weisen im allgemeinen, in Abhängigkeit von der Natur des eingesetzten Ausgangspolyisocyanats a) und der Hydroxylgruppen aufweisenden Reaktionpartner sowie in Abhängigkeit vom Mengenverhältnis der Reaktionspartner einen NCO-Gehalt innerhalb des Breitenbereichs von 5 bis 45 Gew.-% auf. Im Falle der bevorzugten Verwendung von Polyisocyanaten bzw. Polyisocyanatgemischen der Diphenylmethanreihe entstehen

beim erfindungsgemäßen Verfahren urethanmodifizierte Polyisocyanat-Zubereitungen mit einem NCO-Gehalt von 5 bis 30 Gew.-%. Dies bedeutet, daß bei der Durchführung des erfindungsgemäßen Verfahrens die Art und Mengenverhältnisse der Reaktionspartner vorzugsweise so gewählt werden, daß Verfahrensprodukte entstehen, deren NCO-Gehalt innerhalb des letztgenannten Bereichs liegen.

Die erfindungsgemäßen Verfahrensprodukte weisen im allgemeinen einen im Vergleich zum entsprechenden Ausgangspolyisocyanat erniedrigten Schmelzpunkt auf. Sie können vorteilhaft, gegebenenfalls im Gemisch mit anderen Polyisocyanaten der aus der Polyurethanchemie an sich bekannten Art zur Herstellung von Polyurethankunststoffen eingesetzt werden. Besonders vorteilhaft werden die erfindungsgemäßen Verfahrensprodukte als Polyisocyanatkomponente bei der Herstellung von Formkunststoffen nach der "RIM-Technologie" verwendet und zwar sowohl zur Herstellung von harten, halbharten und weichen Integralformstoffen als auch zur Herstellung der entsprechenden massiven, d.h. allenfalls mikrozellularen Formkörper einer zwischen 0,8 und 1,4, vorzugsweise 0,9 bis 1,2 $g/cm^3$ liegenden Rohdichte.

Bei dieser erfindungsgemäßen Verwendung kommen die erfindungsgemäßen Verfahrensprodukte anstelle oder in Abmischung mit den hierzu üblicherweise eingesetzten Polyisocyanaten zum Einsatz. Dies bedeutet insbesondere, daß bei der erfindungsgemäßen Verwendung die Reaktionspartner und Hilfsstoffe für die erfindungsgemäßen Verfahrensprodukte und auch die sonstigen Verfahrensparameter dem Stand der Technik entsprechen, wie er sich beispielsweise aus den deutschen Offenlegungsschriften 1 953 637, 2 121 670, 2 356 692, 2 363 452, 2 404 310, 2 427 273, 2 431 968, 2 307 589, 2 319 648 oder 3 012 126, den US-Patentschriften 4 065 410 oder 4 218 543 bzw. den offengelegten Europäischen Patentanmeldungen (Veröffentlichungsnummern) 17 928, 44 481 oder 81 701 ergibt.

Die erfindungsgemäßen Verfahrensprodukte können selbstverständlich auch bei der Herstellung von anderen Polyurethankunststoffen, beispielsweise bei der Herstellung von freiverschäumten harten, halbharten oder weichen Polyurethanformstoffen vorteilhaft als Polyisocyanatkomponente anstelle oder in Abmischung mit den bislang hierfür eingesetzten Polyisocyanaten verwendet werden. Auch die Herstellung von hochwertigen Polyisocyanurat-Kunststoffen nach den bekannten Verfahren ist unter Verwendung der erfindungsgemäßen Verfahrensprodukte als Polyisocyanatkomponente möglich.

Die mit den erfindungsgemäßen Verfahrensprodukten hergestellten Polyurethankunststoffe zeichnen sich durch ausgezeichnete mechanische Eigenschaften aus. Sie können grundsätzlich für die gleichen Anwendungsgebiete wie die Polyurethankunststoffe des Standes der Technik verwendet werden.

In den nachfolgenden Beispielen beziehen sich alle Prozentangaben auf Gewichtsprozente und alle Angaben in Teilen auf Gewichtsteile.

Beispiele

Zur Herstellung der urethanmodifizierten Polyisocyanat-Zubereitungen (NCO-Semiprepolymeren) kommen die nachfolgenden Verbindungen zum Einsatz:

| | |
|---|---|
| Polyisocyanat I: | Gemisch aus 83 % 4,4'-Diisocyanatodiphenylmethan, 7 % 2,4'-Diisocyanatodiphenylmethan und 10 % höherfunktionellen Polyisocyanaten der Diphenylmethanreihe (NCO-Gehalt 32,2 %) |
| Polyisocyanat II: | 4,4'-Diisocyanatodiphenylmethan |
| Polyisocyanat III: | 2,4'-Diisocyanatodiphenylmethan und 4,4'-Diisocyanatodiphenylmethan im Gewichtsverhältnis 60:40. |
| Diol I: | N,N'-Bis-(hydroxyethyl)-5,5-dimethylhydantoin (OH-Zahl: 519) |
| Diol II: | Methylen-bis-[3-(2'-hydroxyethyl)-5,5-dimethylhydantoinyl-1] (OH-Zahl: 315) |

Beispiel 1 (erfindungsgemäßes Verfahren)

1000 Teile Polyisocyanat I werden bei 20°C mit 149 Teilen Diol I durch Rühren innig vermischt und anschließend während 3 Stunden auf 80°C erhitzt. Die Mengen der Reaktionspartner entsprechen einem NCO/OH-Äquivalentverhältnis von 5,56:1. Die nach Abkühlen auf Raumtemperatur vorliegende, urethanmodifizierte Polyisocyanat-Zubereitung weist einen NCO-Gehalt von 23,5 % und eine Viskosität von 5500 mPa.s (25°C) auf.

Beispiel 2 (Verwendung)

95 Teile eines Polyethertriols der OH-Zahl 27, hergestellt durch Propoxylierung von Trimethylolpropan und anschließende Ethoxylierung des Propoxylierungsprodukts (Gewichtsverhältnis PO:EO = 78 : 22), 23,5 Teile Ethylenglykol, 30 Teile Dichlormethan, 0,15 Teile eines handelsüblichen Polyurethankatalysators auf Zinn-Basis (Katalysator UL1 der Firma Witco) und 0,1 Teile Triethylendiamin werden zu einer Polyolkomponente vereinigt.

235 Teile der so hergestellen Polyolkomponente werden mit 267 Teilen der Polyisocyanat-Zubereitung gemäß Beispiel 1 mit Hilfe eines handelsüblichen, mit einem zwangsgesteuerten Mischkopf ausgerüsteten Kolbendosiergeräts (mit einem Stößel-gereinigten Drosselschiebermischkopf MQ ausgerüstetes Kolbendosiergerät (Rimdomat(R)) der

Firma Hennecke, St. Augustin) bei 25°C innig vermischt und das Reaktionsgemisch in eine auf 60°C erwärmte Stahlform der Innenmaße 20 x 20 x 1cm, deren Innenwämde mit einem handelsüblichen Formtrennmittel auf Wachsbasis (Lösung von "Phönixwachs" in Dichlormethan der Firma Acmos) besprüht worden sind, eingetragen. Nach 2 Minuten wird entformt. Die mechanischen Daten des resultierenden Formkörpers sind in der nachstehenden Tabelle 1 zusammengefaßt.

Beispiel 3 (Vergleich)

280 Teile der Polyolkomponente gemäß Beispiel 2 werden entsprechend Beispiel 2 mit 278 Teilen eines handelsüblichen Polyisocyanatgemischs mit einem NCO-Gehalt von 24,5 % (hergestellt durch Umsetzung von Polyisocyanat I mit Dipropylenglykol) zu einem Formkörper verarbeitet. Die mechanischen Eigenschaften dieses Formkörpers werden ebenfalls in Tabelle 1 mitgeteilt.

Tabelle 1

| | Beispiel 2 | Beispiel 3 |
|---|---|---|
| Raumgewicht ($kg/m^3$) (DIN 53 420) | 694 | 701 |
| Shore D-Härte (DIN 53 505) | 60 | 69 |
| Biege-E-Modul (RT) (MPa) (ASTM-D 790) | 281 | 365 |
| Zugfestigkeit (MPa) (DIN 53 504) | 9,1 | 8,3 |
| Bruchdehnung (%) (DIN 53 504) | 71,3 | 76,0 |
| sag-Test (30 min/160°C) (mm) | 12,8 | 11,3 |
| Schlagzähigkeit bei RT ($kJ/m^2$) (DIN 53 453) | nicht gebrochen | nicht gebrochen |

Beispiel 4 (erfindungsgemäßes Verfahren)

670 Teile Polyisocyanat I werden bei Raumtemperatur mit 100 Teilen Diol I unter Rühren vereinigt und anschließend während 3 Stunden auf 80°C erhitzt. Anschließend werden 192 g eines Polyethertriols der OH-Zahl 28 (hergestellt durch Propoxylierung von Trimethylolpropan und anschließende Ethoxylierung des Propoxylierungsprodukts (Gewichtsverhältnis PO : EO = 83 : 17) hinzugefügt und das so erhaltene Reaktionsgemisch während weiterer 3 Stunden bei 80°C gerührt. Das Äquivalentverhältnis von Isocyanatgruppen zu Hydroxylgruppen beider Ausgangspolyole liegt bei 5,51:1. Die resultierende, urethanmodifizierte Polyisocyanat-Zubereitung weist bei 32°C eine Viskosität von 14 000 mPas und einen NCO-Gehalt von 17,8 % auf.

Beispiel 5 (erfindungsgemäßes Verfahren)

670 Teile Polyisocyanat I werden mit 292 Teile eines Gemischs aus 100 Teilen Diol I und 192 Teilen des in Beispiel 4 verwendeten Polyethertriols verrührt und anschließend während 3 Stunden bei 80°C gerührt. Das Äquivalentverhältnis zwischen Isocyanatgruppen und Hydroxylgruppen liegt bei 5,51:1. Die entstandene, urethanmodifizierte Polyisocyanat-Zubereitung weist bei 32°C eine Viskosität von 6000 mPas und einen NCO-Gehalt von 18 % auf.

Beispiel 6 (Verwendung)

161 Teile des Polyethertriols aus Beispiel 2, 40 Teile Ethylenglykol, 17 Teile Dichlormethan, 0,2 Teile des Zinnkatalysators aus Beispiel 2 und 0,17 Teile Triethylendiamin werden zu einer Polyolkomponente vereinigt und mit 309 Teilen der urethanmodifizierten Polyisocyanat-Zubereitung aus Beispiel 4 entsprechend Beispiel 2 zu einem Formkörper verarbeitet.

Die mechanischen Daten des resultierenden Formkörpers werden in Tabelle 2 mitgeteilt.

Beispiel 7 (Verwendung)

Beispiel 6 wird wiederholt mit dem einzigen Unterschied, daß anstelle der Polyisocyanat-Zubereitung aus Beispiel

4 309 Teile der Polyisocyanat-Zubereitung aus Beispiel 5 zum Einsatz gelangen.

Die Daten des resultierenden Formkörpers werden in Tabelle 2 mitgeteilt.

Tabelle 2

| | Beispiel 6 | Beispiel 7 |
|---|---|---|
| Raumgewicht (kg/m³) (DIN 53 420) | 980 | 1018 |
| Shore-D-Härte (DIN 53 505) | 62 | 62 |
| Biege-E-Modul (RT) (ASTM-D 790) | 164 | 277 |
| E-Modul aus Zugversuch (RT, MPa) (DIN 53 455) | 143 | 198 |
| Bruchdehnung (%) (DIN 53 504) | 180 | 112 |
| Zugfestigkeit (MPa) (DIN 53 504) | 8,4 | 14,0 |
| sag-Test (160°C/30 min) (mm) | 14,2 | 13,7 |

Beispiel 8 (Verwendung)

770 Teile des Polyethertriols der OH-Zahl 28 aus Beispiel 4, 23 Teile eines Gemischs aus 65 % 1-Methyl-2,4-diamino-3,5-diethyl-benzol und 35 % 1-Methyl-2,6-diamino-3,5-diethylbenzol, 0,2 Teile des Zinnkatalysators gemäß Beispiel 2 und 0,6 Teile einer 33 %igen Lösung von Triethylendiamin in Dipropylenglykol werden zu einer Polyolkomponente vereinigt.

Entsprechend Beispiel 2 werden jeweils 100 Teile dieser Polyolkomponente mit 57,4 Teilen der urethanmodifizierten Polyisocyanat-Zubereitung gemäß Beispiel 1 (Versuch A) bzw. mit 55 Teilen des handelsüblichen Polyisocyanats gemäß Beispiel 3 (zum Vergleich) zu Formkörpern verarbeitet.

Die mechanischen Eigenschaften des resultierenden Formkörpers werden in der Tabelle 3 mitgeteilt.

Tabelle 3

| | 8A | 8B |
|---|---|---|
| Raumgewicht ($kg/m^3$) (DIN 53 420) | 1093 | 1100 |
| Shore-D-Härte (DIN 53 505) | 58 | 58 |
| Zugfestigkeit (RT) (MPa) (DIN 53 504) | 25,6 | 26 |
| Bruchdehnung (%) (DIN 53 504) | 257 | 256 |
| Weiterreißfestigkeit (KN/m) (DIN 53 515) | 53,6 | 65 |
| Zugspannung, 50 % (MPa) (DIN 53 504) | 13,5 | |
| Biege-E-Modul (MPa) RT (ASTM-D 790) | 425 | 350 |
| 120°C | 166 | 200 |
| sag-Werte (30 min/160°C) (mm) | 6 | 4 |

Beispiel 9 (erfindungsgemäßes Verfahren)

1250 g Polyisocyanat II und 210 g Diol I werden bei 50°C vereinigt und unter Rühren zuerst 30 Minuten auf 50°C und dann 3 Stunden auf 80°C erhitzt. Das NCO:OH-Äquivalentverhältnis beträgt 5,15:1. Der NCO-Gehalt des bei 20°C festen Produkts beträgt 23,04 %.

Beispiel 10 (erfindungsgemäßes Verfahren)

1278 g Polyisocyanat II werden auf 80°C erhitzt und dann unter Rühren zu 220 g Diol I gegeben, wobei die Temperatur durch Kühlen auf dieser Temperatur gehalten wird. Insgesamt wurde 3 Stunden bei dieser Temperatur gerührt, der NCO-Gehalt des langsam kristallisierenden aber ebenso wie das Produkt aus Beispiel 9 durch Erhitzen auf 50°C leicht zu verflüssigenden NCO-Semiprepolymers beträgt 22,25 %, das NCO:OH-Äquivalentverhältnis beträgt 5,04:1.

Beispiel 11 (Verwendung)

225 g einer Mischung aus dem Polyetherthiol aus Beispiel 2 und Ethylenglykol im Gewichtsverhältnis 95:23,5, 10 g Dichlormethan, 0,08 g des Zinnkatalysators aus Beispiel 2 werden zu einer Polyolkomponente vereinigt und mit 274 Teilen der urethanmodifizierten Polyisocyanat-Zubereitung aus Beispiel 9 entsprechend Beispiel 2 zu einem Formkörper verarbeitet.

Die mechanischen Daten dieser Formkörper sind in Tabelle 4 aufgelistet.

Beispiel 12 (Verwendung)

222 g einer Mischung aus dem Polyethertriol aus Beispiel 2 und aus Ethylenglykol im Gewichtsverhältnis 95:23,5, 10 g Dichlormethan, 0,08 g des Zinnkatalysators aus Beispiel 2 werden zu einer Polyolkomponente vereinigt und mit 282 g der 60°C warmen, urethanmodifizierten Polyisocyanat-Zubereitung aus Beispiel 10 entsprechend Beispiel 2 zu einem Formkörper verarbeitet.

Die mechanischen Daten dieser Formkörper sind in Tabelle 4 aufgelistet.

Tabelle 4

| | Beispiel 11 | Beispiel 12 |
|---|---|---|
| Raumgewicht (DIN 53 420) (kg/m³) | 1010 | 1035 |
| Shore-D-Härte (DIN 53 505) | 65 | 68 |
| Biege-E-Modul (23°C) (MPa) (ASTM-D 790) | 353 | 402 |
| max. Zugspannung (MPa) (DIN 53 455) | 9,8 | 12,2 |
| Reißdehnung (%) (DIN 53 455) | 27,9 | 33,8 |
| sag-Test (160°C/30 min) (mm) | 16,2 | 9,8 |

Beispiel 13 (erfindungsgemäß)

517 g Polyisocyanat I werden auf 80°C erwärmt und bei dieser Temperatur 100 g Diol II unter Rühren zugegeben. Bei dieser Temperatur wird 2 h gehalten und dann 2 h auf 120°C erhitzt. Das flüssige Produkt weist einen Isocyanatgehalt von 23,05 % auf. Der verwendete NCO:OH-Äquivalentverhältnis beträgt 7,04:1.

Beispiel 14 (erfindungsgemäßes Verfahren)

1000 g Polyisocyanat III werden mit 150 g Diol I bei Raumtemperatur vereinigt und unter Rühren 4 h bei 80°C gehalten. Das NCO:OH-Äquivalentverhältnis beträgt 5,77:1. Der NCO-Gehalt des flüssigen Produktes beträgt 24,3 % bei einer Viskosität von 4900 mPa.s (25°C).

Beispiel 15 (erfindungsgemäßes Verfahren)

1000 g Polyisocyanat III werden mit 205 g Diol II bei Raumtemperatur vereinigt und unter Rühren 4 h bei 80°C gehalten. Das NCO:OH-Äquivalentverhältnis beträgt 6,93:1, der NCO-Gehalt des flüssigen Produktes liegt bei 24 % bei einer Viskosität von 7300 mPa.s (25°C).

Beispiel 16 (erfindungsgemäßes Verfahren)

1000 g Polyisocyanat I werden mit einem Gemisch aus 100 g Diol I und 40 g Dipropylenglykol bei Raumtemperatur vereinigt und 3 h bei 80°C gehalten. Das NCO:OH:OH-Verhältnis beträgt 8,33:1:0,65, der NCO-Gehalt des NCO:OH:OH flüssigen Produktes liegt bei 23,75 %.

Patentansprüche

1. Verfahren zur Herstellung von urethanmodifizierten Polyisocyanat-Zubereitungen mit einem NCO-Gehalt von 5 bis 45 Gew.-% durch Umsetzung von a) organischen Polyisocyanaten mit einem NCO-Gehalt von 30 bis 50 Gew.-% oder Gemischen von organischen Polyisocyanaten mit einem NCO-Gehalt von 30 bis 50 Gew.-% mit b) organischen Polyhydroxylverbindungen unter Einhaltung eines NCO/OH-Äquivalentverhältnisses von 2 : 1 bis 50 : 1, dadurch gekennzeichnet, daß man als organische Polyhydroxylverbindungen b) 2 alkoholische Hydroxylgruppen aufweisende, an Stickstoff Hydroxyalkylsubstituenten, die gegebenenfalls Etherbrücken aufweisen, tragende Hydantoine des OH-Zahl Bereichs 56 bis 596, gegebenenfalls in Abmischung mit bis zu 50 Hydroxyläquivalentprozent an anderen organischen Polyhydroxylverbindungen verwendet.

2. Verfahren gemäß Anspruch 1, dadurch gekennzeichnet, daß man als Polyhydroxylverbindungen b) solche der Formel

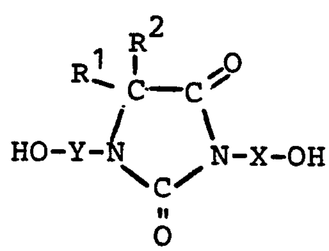

(I)

verwendet, wobei

$R^1$ und $R^2$ für gleiche oder verschiedene Reste stehen und Alkylreste bedeuten oder zusammen mit dem Kohlenstoffatom des heterocyclischen Rings einen cycloaliphatischen Ring bilden,

X für einen geradkettigen oder verzweigten Alkylenrest mit 2 bis 6 Kohlenstoffatomen oder einen Rest steht, wie er durch Entfernung des endständigen Sauerstoffatoms aus einer Polyalkylenetherkette erhalten wird, und

Y für einen Rest der bei der Definition von X genannten Art oder einen Rest der Formel

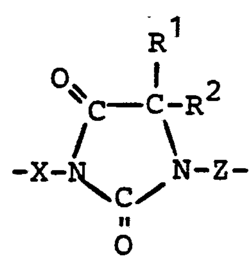

(II)

steht, wobei

X die bereits genannte Bedeutung hat, wobei die Hydroxylgruppe mit dem Rest X verknüpft ist, und

Z für einen zweiwertigen Kohlenwasserstoffrest steht.

3. Verfahren gemäß Anspruch 1 und 2, dadurch gekennzeichnet, daß man als Polyhydroxylverbindungen b) solche der in Anspruch 2 genannten Formel (II) verwendet, für welche

$R^1$ und $R^2$ für gleiche oder verschiedene Reste stehen und Alkylgruppen mit 1 bis 4 Kohlenstoffatomen bedeuten oder zusammen mit dem Kohlenstoffatom des heterocyclischen Rings einen cycloaliphatischen Kohlenwasserstoffrest mit 5 oder 6 Kohlenstoffatomen bilden und

X und Y für gleiche Reste stehen und jeweils Ethylen- oder 1,2-Propylen-Reste bedeuten.

4. Verfahren gemäß Anspruch 1 bis 3, dadurch gekennzeichnet, daß man als Polyisocyanate a)

a1) 4,4'-Diisocyanatodiphenylmethan oder dessen Gemische mit 2,4'-Diisocyanatodiphenylmethan und gegebenenfalls 2,2'-Diisocyanatodiphenylmethan,

a2) rohe Phosgenierungsprodukte von Anilin/Formaldehyd-Kondensaten, die neben den unter a1) genannten Isocyanaten deren höhere Homologe enthalten, oder

a3) Gemische der unter a1) und/oder a2) genannten Polyisocyanate mit bis zu 50 NCO-Äquivalentprozent, bezogen auf Gesamtgemisch, an anderen aromatischen Polyisocyanaten

verwendet.

5. Verwendung der gemäß Anspruch 1 bis 4 erhaltenen, urethanmodifizierten Polyisocyanat-Zubereitungen als Isocyanat-Komponente bei der Herstellung von Polyurethankunststoffen nach dem Isocyanat-Polyadditionsverfahren oder von Polyisocyanuratkunststoffen.